# EUROPEAN PATENT APPLICATION

(11) **EP 2 688 004 A1**
(43) Date of publication of application: **22.01.2014**
(21) Application number: 11861296.9
(22) Date of filing: 31.05.2011
(51) Int. Cl.: G06F 19/00, G06F 17/30

(54) **METHOD FOR DISPLAYING AN ADVERTISEMENT ON INTERNET RESOURCES DEPENDING ON THE COMBINED CONTENT THEREOF**

(30) Priority: 15.03.2011 RU 2011109651
(71) Applicant: WeSEE Limited, London W1T 4QA (GB)
(72) Inventor: YUDASHKIN,Alexandr Anatolievich, Samara 443096 (RU)
(74) Representative: Bray, Richard Anthony
(86) International application number: PCT/RU2011/000381
(87) International publication number: WO 2012/125064

(57) **Abstract**

7. The invention relates to a content-oriented advertising display on the Internet resources. The technical result of the invention is the increasing of the level of ad conformity to the web-sites content. The method of ad displaying on the Internet, depending on their composite content is that the data contained within the web page is divided into text and multimedia, then transmitted to the advertisement displaying system and their comparison with existing database systems of ad displaying is performed on the principle of visual similarity of multimedia data from a web page with multimedia data from ad displaying system database, and on the principle of conformity of the text from the web-page with the test description from ad displaying system database, the relevancy of certain types of data is calculated, obtain one or several lists of numerical relevance of specific data types from the web page of corresponding ad categories or data type ad from the web-page by comparing the data from the ad displaying database with certain categories of ad, then a single list of the numerical relevance of data from a web page advertising categories or advertisements is formed. After that additional numerical conditions are applied, the obtained list is sorted by decrement, and the limited set of advertisements that corresponds to the max value from the list is displayed on the web-page.

## Description

### Technical field

The invention relates to a content-oriented advertising display on the Internet resources.

### Background of the invention

There is an indexing system construction method for object search on digital images. (1). There is also the Web-pages search method upon the combined request. (2). These methods can be used as means for realization of different parts of the claimed method.

However, the described above methods are not identical to the claimed method as they are oriented to the achievement of the other objectives and other means.

It is already known the ad display method, in which the decision is made on the basis of the image information and user behavior (eg, behavioral-based ads) (3).

The disadvantage of mentioned above method is the usage of information related to the image, as opposed to the claimed method, which uses all the data in the resource, including information about the image (or group of images), and the text, which is not associated with image at all (for example, the text of news article on a site or users comments in his blog), and decision taken in a certain way is based on behavioral advertising, which is considered to be the other technical segment, about which there are a lot of conflicting opinions at the moment (from a legal viewpoint as well).

The closest to the technical nature is a way of ad displaying, in which the data contained on the web page is shared with text and multimedia, and then transmitted to the ad displaying system.
After that the comparison with existing database systems of ad displaying is performed on the principle of visual similarity of multimedia data from a web page with multimedia data from ad displaying system database, and on the principle of conformity of the text from the web-page with the test description from ad displaying system database, and at last, one type of data from the web-page is obtained which corresponds to ad category or data type advertisement from the web-page. (4).

The disadvantage of the prototype is that the work is performed with a single multimedia sample (for example, with single image or film) and conclusion is based on the analysis of a single object, in contrast to the claimed one, in which the conclusion is based on a weighted analysis of one or a set of objects, which significantly changes the situation as it assumes different accounting results for one or more advertisements output.

### Character of invention and technical result

Technical result, on achievement of which the instant invention is directed, is to improve the quality of information resources search by providing the user with effective tool for construction of the combined query that includes a text query and any multimedia information (static images, video, music), the conclusion is based on a weighted analysis of one or a set of objects, which significantly changes the situation as it assumes different accounting results for one or more advertisements output, the ability to output advertisement either in the search, and on page of third-party site.

Technical result, on achievement of which the instant invention is directed, is that in ad displaying method on the Internet resources, the data contained within the web page is divided into text and multimedia, then transmitted to the advertisement displaying system and their comparison with existing database systems of ad displaying is performed on the principle of visual similarity of multimedia data from a web page with multimedia data from ad displaying system database, and on the principle of conformity of the text from the web-page with the test description from ad displaying system database, the relevancy of certain types of data is calculated, obtained one or several lists of numerical relevance of specific data types from the web page of corresponding ad categories or data type ad from the web-page by comparing the data from the ad displaying database with certain categories of ad, then a single list of the numerical relevance of data from a web page advertising categories or advertisements is formed. After that additional numerical conditions are applied, the obtained list is sorted by decrement, and the limited set of advertisements that corresponds to the max value from the list is displayed on the web-page.

Additional numerical conditions may depend on the balance or logic conditions of advertisements or advertising categories in the advertising displaying system.

The data entered by user as a search query into a search engine may be exposed to analysis.

The data displayed on the web-page, visited by user may be exposed to analysis.

The data entered by user for entering in his account on the web-site.

The data contained in the e-mail message and differ in the fact that advertisements are displayed in the e-mail message may be exposed to analysis.

The data transmitted from one user to another via the system of internet-messages exchange may be exposed to analysis, the advertisements are displayed in the window of internet-messages exchange system.

Advertisements may be displayed directly within multimedia data by putting the ad text on the multimedia image.

Advertisements may not be displayed due to the detection of data corresponding to the prohibited content categories.

A general list of the numerical relevance of data from the web page may be generated by computing for each identified category of advertising, or advertising function of several values of the relevance of the same category of advertising or advertisement.

In the method of ad displaying from web-site content or data represented by the Internet user during searching on the Internet or using of the other resources, text and multimedia data are distinguished and are classified by similarity with existing data in the database, which are also compared with individual categories of advertising or promotional ads. One or more of these categories may be defined as targeted advertising themes and types of data alike, next to which the advertisements couldn't me displayed. For each type of the selected data the relevance calculation operation is performed considering the data from the ad displaying system database.
For each individual list of relevance there is made a list of relevance to an ad category or advertisement, calculated as a function from relevant set of values of different data units that corresponds to the ad category. Then the one list is composed upon the list of relevance to the ad and upon various types of data, this list has the relevance values, calculated as the value functions of various types of data of ad category or advertisement. Various additional conditions are put on the obtained list, that depend on the advertisement or ad category in the system of ad displaying, after that the obtained list is sorted by decrement. As a result, the advertisements corresponding to the limited set of maximum values from the list, when the user opens the web site, are displayed on these web-sites; or stopping the displaying of those advertisements that have the data corresponding to the blocked categories.

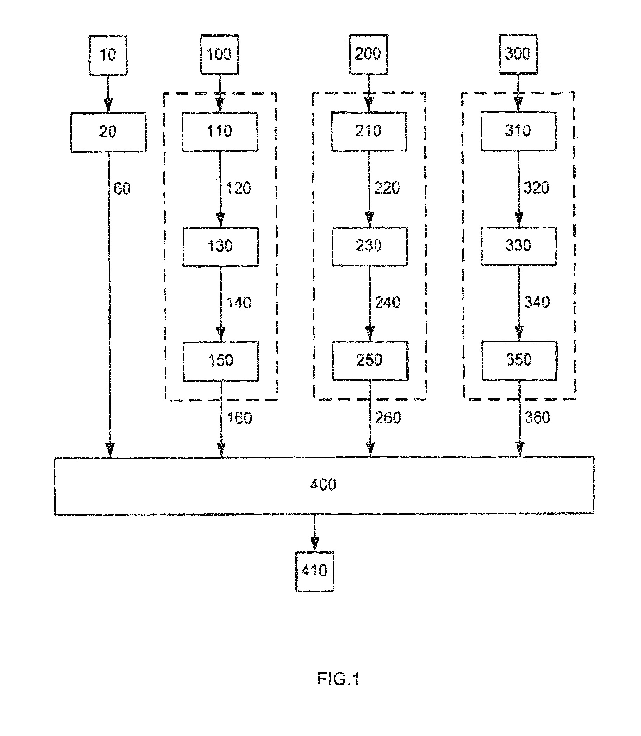

As an example, the claimed method is illustrated as a sequence of operations shown of fig.1, where:
10-is a request
20 - text search operation;
60 - the list of URL address, formed as a result of the text search;
100, 200, 300 - generated by user requests upon the various types of multimedia data (images, video, music);
110, 210, 310 - specific object selecting operations from the requests on various types of multimedia data (images, video, music) and formation of signatures for every found object.
120, 220, 320 - signature lists of specific objects, selected from various types of multimedia requests (images, video, music);
130, 230, 330- similar objects search operations of corresponding multimedia data type;
140, 240, 340 - lists of found objects of relevant media types containing URL address, where the object and relevance value are located;
150, 250, 350 - operations calculating the values of relevance for each
URL-address depending on the number of objects located at the address and the objects relevance value;
160, 260, 360 - URL-address lists, formatted as a result form the search on each type from multimedia data;
400 - operations calculating the generalized values of relevance for each URL-address;
410 - general list of URL-addresses, sorted by decrement of values of generalized relevance.

To search by any type of multimedia data depending on the type of analyzed data of represented for data search, specific objects or characteristics are selected. The object may be identified as different things, such as faces or cars etc. on the images or in the video, theme music - in the music, or the characteristics of the items may be selected, such as form, color etc. A set of similarities is formed for each object, which is sorted by decrement of object similarity from the basic set (signature), for example, with the aim of artificial neural network.
For selected objects the search of multimedia data is performed that comprise the similar objects and formation of URL-address lists of the web-pages with found multimedia data.

The list of URL-addresses and web-pages is formed independently upon the type of multimedia data and upon the text request. The index of each object from the database of the system is calculated by the number of object matches from the basic set in the signature of the claimed for search object and on the presented object search and signatures stored in the indexed sites database. In such a way, the relevancy for each indexed object may be calculated as a ratio of the number of matches of a base set of objects to the total number of objects in the set of basic signature. There are also many other methods. There may be located several objects on one web-page, that's why the relevancy of each URL address from the list of URL-addresses is calculated by weighted summation of the maximum relevance value of the objects located on the web-page and the value of nonlinear function with saturation from the sum of relevance values from all the objects found on it.

After that the system generates the general list of URL addresses, grouping the same addresses from the lists-results of the text search and search upon the multimedia type of data and calculating of the final relevance value as the weighted sum of relevance values result of the text search and search upon the multimedia type of data.
The general list of URL-address, sorted by decrement of generalized value of relevance, is represented to user as a result of combined request.

The user initiates a search, creating an arbitrary combination of queries: the text inquiry (10), and/or the inquiry to search upon the images (100), and\or the inquiry to search upon the video (200), and/or the inquiry to search upon the music (300).
The text search operation (20) processes the text inquiry (10) formed by user, generating the list of URL-addresses (60) with the relevance values of each text inquiry URL-address (10).

The operation of specific objects separation on the represented by user images (110) generates the list of signatures of all found on these images objects (120). Given method of work is not a single one. The signatures from the list (120) come in turns to the input of search operation of similar objects (130) that generates the list of similar objects (140) that are in the search engine database. Each list row contains the URL-address, at which the object is found and the relevance value, calculated for given object in relation to one of the objects in the user's inquiry (100). As a result, the list may contain several rows with the same values of URL-addresses and corresponding values of relevance. The list (140) is processed as a result of operation of relevance calculation for each URL-address (150). The similar URL-addresses are grouped and then the relevance value for each group is calculated by the weighted summation of the maximum value for each group of relevance value and the value of a nonlinear function with the saturation from the sum of relevance values of all the objects in the group. As a result of operation (150) the list (160) is formed, which contains the URL-address of each group and the calculated relevance value of the group.

The similar operations are carried out for inquires (200) and (300). Specific objects are selected by performing operations (210) and (310), upon which the search will be carried out.
The signatures, formed for each of selected specific object, are registered in the lists (220) and (320). As a result of performing of operations (230) and (330) correspondingly and on base of found objects lists (240), (340), by performing operations (250), (350) the lists (260), (360) are formed that contain the URL-addresses of each group and calculated relevance value of the group for inquiry on the video (200) and music (300) correspondingly. Generated lists (60), (160), (260), (360) undergo the calculation operation of generalized relevance value of URL-address (400).

A single list is formed on base of all lists that is grouped by URL-addresses. Generalized relevance value is calculated as the sum of the relevance values of each group, classified as amount of component type of combined request. The list (410) of URL-addresses and generalized relevance values, sorted by decrement, returns to user as a result of combined request.

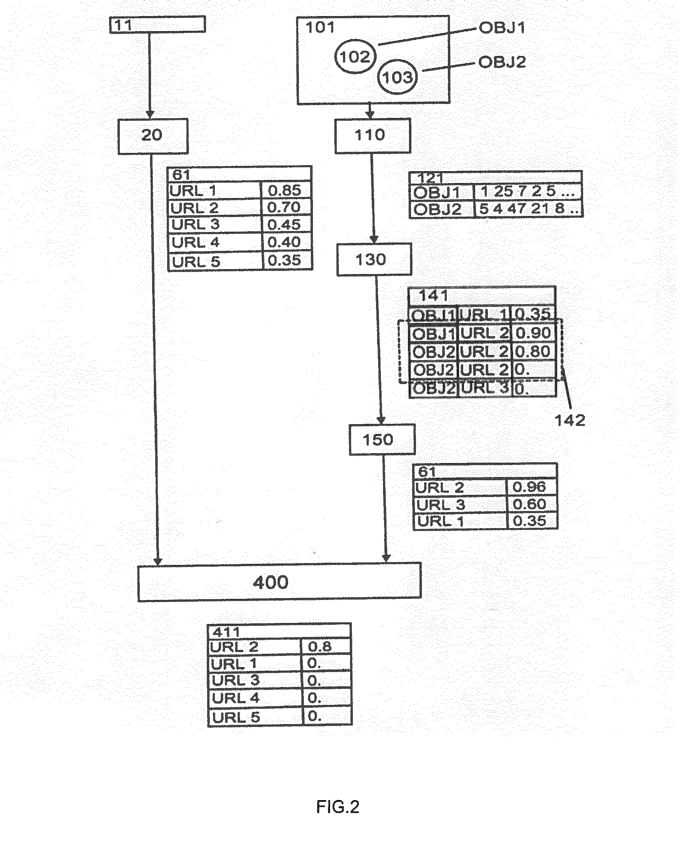

There is an example of the system work during combined inquiry on the fig.2, where:
11 - the text inquiry;
61 - the list of URL-addresses, formed as a result of the text search;
101 - image-inquiry;
102, 103 - the objects display (OBJ1 and OBJ2) that were found by the system on the image-inquiry and for inquiry formation in future;
121 - the list of signatures found on the object image-inquiry;
141 - the list, in which each line is indicated: the searched object, URL-address at which the object is located, that is similar to the searched one, the relevance value (similarity). The list is grouped by URL-addresses;
142- the group example with one URL-address;
161 - the list of addresses generated after the calculation of relevance value for each group;
411 - general list of URL-addresses, sorted by decrement of values of generalized relevance.
The operations (20), (110), (130), (400) perform the same actions as a before.

The user is forming the inquiry that consists from text inquiry (11) and image (101) in the example on fig.2.2.

As a result of text inquiry processing, the list of URL-addresses (61) is formed.

To process the inquiry on the image (101) the system finds the images of to objects (102) and (103) in the image-inquiry, for which the list of signatures is formed (121).
After that, all similar objects in the base of the system for each object (102) and (103) are found and the list is formed (141), grouped by similar URL-addresses (see example 142). The relevance of each group is calculated after that and the list of URL-addresses is formed (161), sorted by relevance decrement. The lists (61) and (161) are used for final searching result formation- the list (411) that returns to user as an inquiry result.

An important difference of the proposed method from the existing ones is that to determine, which ad should be displayed, not only analysis of arbitrary number of text units is used but also the analysis of multimedia data on the web-page or in users inquiry (for example, static images or video) and also the generalized rating making of the resource regarding certain categories of advertisements. In this case, every variant is possible: the analysis of a single text, or the multimedia, or both the text and multimedia, here we are talking about displaying of advertisement that most accurately corresponds to the page content. One of the way of this method realizing is blocking of ad displaying on a given web-page, if the forbidden content (such as porn) aws found. In this case, the main achievement is the way to determine exactly what kind of ads to display depending on the content of the resource, rather than a place of ad is playing.

The sources of information:
1. The Russian Federation patent Nº2345414, IPC G06K 9/00, 2009.
2. The Russian Federation patent Nº2393537, IPC G06F 17/30, 2010.
3. China patent paper Nº 101520782, IPC G06F 17/30;
   G06Q 30/00, 2009.
4. USA patent Nº 7856358, IPC G10L 21 /00, 2010.

## Claims

1. The method of ad displaying on the Internet, depending on their composite content, is that the data from the web-page is divided on text and multimedia, and then these data is transmitted to the system of ad displaying after which their comparison with existing ones in the database of ad displaying system is performed on the principle of visual similarity
of multimedia data from the web-page with the data from the database of ad displaying, and by principle of the web-page text conformity to the text description of the database, the degree of relevance is calculated of
separate types of data, one or more lists of numerical relevance of specific data types from web pages to the correspondent ad category and ad types of data from the web pages by comparing the data from a database of ad displaying system with certain categories of advertisement,
on a set of separate lists of relevance, a single general list of numerical relevance of the data from the web-pages to ad categories is formed, then the other additional conditions are put on this list, after that obtained list is sorted by decrement, and the limited set of advertisements are outputted on the web-page that correspond to the max values from the list.

2. The method according to claim 1, is different in that the additional numerical conditions depend on weight and logic conditions of ad in the system of ad displaying.

3. The method according to claim 1, is different in that the data entered by user as an inquiry in the search engine is analyzed.

4. The method according to claim 1, is different in that the data entered by user as an inquiry in the search engine is analyzed.

5. The method according to claim 1, is different in that the data displaying on the web-page visited by user is analyzed.

6. The method according to claim 1, is different in that the data, contained in the e-mail message and differ in that the advertisements are outputted in the e-mail message, is also analyzed.

7. The method according to claim 1, is different in that the data transmitted from one user to another via the system of Internet-messages exchange, is analyzed, and the advertisements are displayed in the window of Internet-messages exchange system.

8. The method according to claim 1, is different in that the advertisements appear directly within the multimedia data by overlaying of ad text on multimedia image.

9. The method according to claim 1, is different in that the advertisements are not displayed as a result of detection of data corresponding to forbidden content categories

10. The method according to any of the claims 1-9 is different in that the general list of the numerical relevance of data from a web page is formed by calculating for each identified category of advertising, or advertising function of several values of the relevance of the same category of advertising.
